# EUROPEAN PATENT SPECIFICATION

(11) **EP 3 015 220 B1**
(45) Date of publication and mention of the grant of the patent: **24.07.2024**
(21) Application number: 15192551.8
(22) Date of filing: 02.11.2015
(51) Int. Cl.: B24B 23/02, B24B 55/10, B25F 5/02, B23Q 11/00, B23Q 1/00, F16L 37/10, F16L 37/23

(54) **POWER TOOL DUST PORT CONNECTOR MECHANISM**
STAUBPORTSTECKERMECHANISMUS EINES ELEKTROWERKZEUGS
MÉCANISME DE CONNECTEUR POUR PORT DE POUSSIÈRE D'OUTIL ÉLECTRIQUE

(30) Priority: 31.10.2014 US 201462073056 P; 28.10.2015 US 201514925595
(43) Date of publication of application: 04.05.2016
(73) Proprietor: Black & Decker Inc., New Britain, CT 06053 (US)
(72) Inventor: Miller, Philip T., Phoenix, MD Maryland 21131 (US); Helme, Ethan, Nottingham, MD Maryland 21236 (US); Doehner, Thomas, Timonium, MD Maryland 21093 (US); Past, Adam, York, PA Pennsylvania 17404 (US)
(74) Representative: SBD IPAdmin

(56) References cited:
- DE-U1- 29 508 874
- GB-A- 191 327 656
- GB-A- 2 021 722
- US-A- 5 545 082
- US-A1- 2006 150 590
- US-A1- 2007 254 516
- US-A1- 2013 056 977

## Description

The present invention relates, in general, to the field of power tools. In particular, the present invention relates to a power tool for sanding a workpiece.

Orbital sanders are used in a wide variety of applications such as woodworking and auto body repair work. Such sanders typically employ a housing, a motor disposed within the housing, a shaft operably coupled to the motor, a shroud coupled to the housing for supporting and communicating with a dust collecting receptacle (attached hereto), and a fan operably coupled to the motor shaft for drawing a cooling air flow in through openings in the housing and exhausting the cooling air flow through openings in the shroud to help cool the motor. The shroud is preferably rotatably coupled to the housing to enable the dust collecting receptacle thereof to be rotated out of the way by the user to enable convenient use of the sander.

Random orbital sanders are one type of sander that typically includes a platen that is driven rotationally by a motor-driven spindle. The platen is driven via a freely rotatable bearing that is eccentrically mounted on the end of the drive spindle. Rotation of the drive spindle causes the platen to orbit about the drive spindle while frictional forces within the bearing, as well as varying frictional loads on the sanding disc attached to the platen, cause the platen to also rotate about the eccentric bearing, thereby imparting the "random" orbital movement to the platen. The fan, which is driven by the output shaft of the motor, is adapted to draw dust and debris generated by the sanding action up through openings formed in the platen and into the dust collecting receptacle.

Electric quarter sheet sanders are another type of orbital sander having an electric motor that drives an orbit mechanism that moves the platen in an orbital pattern. A sheet of sandpaper is removably fastened to the platen. When the platen with the sandpaper fastened thereto is applied to a work surface, such as to wood, the orbital motion of the platen moves the sandpaper in an orbital motion against the work surface to sand it. Since a full sheet of sandpaper is 22.86 cm (9 inches) by 27.94 cm (11 inches) and the sheet of sandpaper fastened to the platen is 11.43 cm (4-1/2 inches) by 13.97 cm (5-1/2 inches), or 1/4 of a full sheet of sandpaper, sanders of this type are commonly known as 1/4 sheet sanders.

One issue that these sanders and dust generating power tools have in common is that although the dust bag is attached to the dust port of the tool, the dust bag is not locked to the tool and can be pulled away along the dust port axis.

In sanders with dust collectors, particularly those that use passive systems such as a cloth bag to catch dust, maintaining the dust collection apparatus in the locked position can be challenging. In an improvement to such passive systems, the present application discloses a power tool dust collection system that can be attachably locked to the housing dust port with a dust port connector mechanism

US2013/0056977 A1 discloses a connection assembly for tubular goods.

US5545082 discloses a dust control system for rotary hand tools (and can be considered as a basis for the preamble of claim 1).

GB27,656 discloses a coupling for tubes.

GB20212722 A discloses a pipe joint for a vacuum cleaner hose.

DE29508871 U1 discloses a hand tool with dust extraction.

US2006/0150590 A1 discloses a debris collection device with a self-cleaning retention system that is designed for powered tools such as a sander.

According to the present invention, there is provided a power tool comprising the features of claim 1. Preferred embodiments are defined in the dependent claims.

The power tool can be a sander having a housing and a channel or dust port for exhausting dust generated during use. The connector mechanism includes a dust port on the tool housing having castellations on an exterior surface thereof that mate with castellations arranged on the interior surface of a collar assembly. The interlocking or mating castellations keep any accessory attached to the collar assembly, such as a dust bag from rotating when a user activates a locking member by rotating the collar assembly

The number of castellations on the collar assembly can be less than the number of castellations of the dust port to help achieve a quick connection, specifically, a connection that does not require pre-alignment of the castellations. In this manner, any alignment of the dust port of the housing to the collar assembly creates an interface that can be locked with one fluid hand movement.

In an embodiment, a power tool may include a housing; a dust port integrally formed with the housing; a first plurality of castellations radially spaced about the dust port at a distal end, wherein a proximal end of the dust port further includes an elongated portion adjacent to and axially spaced from the first plurality of castellations, the elongated portion having a continuous generally tubular shape; a collar assembly having proximal and distal ends, the proximal end engaging the elongated portion of the dust port and the distal end including a second plurality of castellations radially spaced about an interior surface thereof for non-selectively engaging the first plurality of castellations to establish a mating interface between the collar assembly and the dust port; and a plurality of locking members radially spaced about the collar assembly to establish a non-axially moveable locking relationship between the collar assembly and the dust port.

In another embodiment, the power tool may include a collar assembly having an inner collar that is removably fixed to the dust port and an outer collar rotatable with respect to the inner collar.

In another embodiment, the first plurality of castellations is integrally formed on an exterior surface of the dust port and the second plurality of castellations is integrally formed on an interior surface of the inner collar.

In another embodiment, any of the second plurality of castellations on the inner collar achieve a mating interface with any of the first plurality of castellations on the dust port without pre-alignment, and the locking relationship between the collar assembly and the dust port creates a non-axially moveable connection between the collar assembly and the dust port.

In another embodiment, the number of castellations on the inner collar can be greater than the number of castellations on the dust port.

In another embodiment, the inner collar includes a plurality of apertures radially spaced thereabout and corresponding recess members on an exterior surface thereof, wherein the recess members are located between the plurality of apertures and the proximal end of the collar assembly, and the plurality of locking members float within the plurality of apertures in the inner collar.

In another embodiment, the elongated portion of the dust port includes a radially configured locking member groove on an exterior surface thereof that receives the plurality of locking members.

In another embodiment, the interior surface of the outer collar includes ramps having a rise portion and a tapered portion, wherein when the outer collar rotates in a first direction, the rise portion of the ramps apply a force against the locking members to press the plurality of locking members into the locking member groove in a friction fit to lock the collar assembly to the dust port and, when the outer collar rotates in a second direction, opposite to the first direction, the force applied by the ramps is removed to unlock the collar assembly from the dust port.

In a further embodiment, a connector mechanism for a power tool includes a collar assembly having an inner collar and an outer collar disposed around the inner collar, and a plurality of locking members radially spaced about the inner collar between the inner collar and the outer collar. The plurality of locking members protrudes into the interior of the inner collar. The inner collar includes a plurality of castellations radially spaced about an interior surface thereof for non-selectively engaging a portion of the power tool, and the plurality of locking members exerts a force on said portion of the power tool to establish a locking relationship between the collar assembly and the power tool.

The numerous advantages of the present invention may be better understood by those skilled in the art by reference to the accompanying Figures. In the drawings, like reference numerals designate corresponding parts throughout the several views.
FIG. 1 illustrates a perspective view of an orbital sander according to an embodiment of the invention;
FIG. 2 illustrates a cross-sectional view of the orbital sander of FIG. 1 according to an embodiment of the invention.
FIG. 3 illustrates a perspective view of the connector mechanism and dust port according to an embodiment of the invention;
FIG. 4 illustrates an exploded view of the dust collection system according to an embodiment of the invention;
FIG. 5 illustrates a perspective view of the inner collar according to an embodiment of the invention; and
FIG. 6 illustrates a cross-sectional view of the connector mechanism according to an embodiment of the invention.

Reference will now be made in detail to the presently preferred embodiments of the invention, examples of which are illustrated in the accompanying drawings.

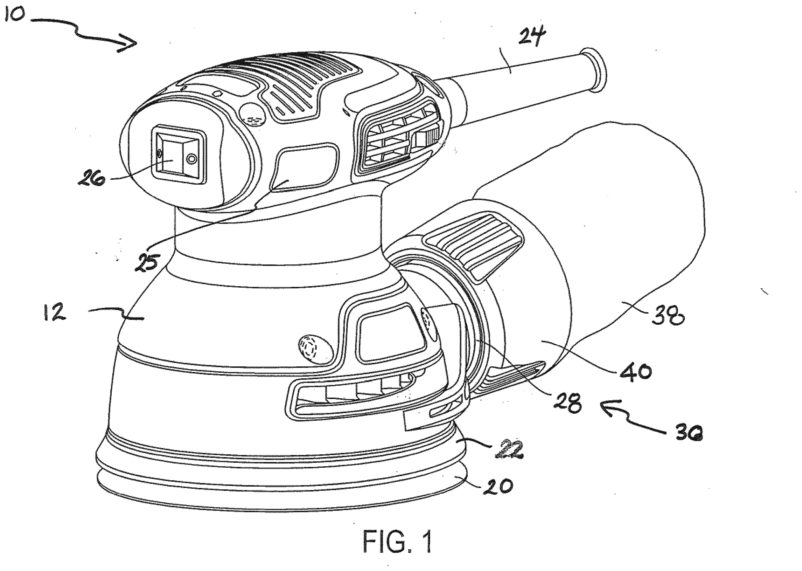

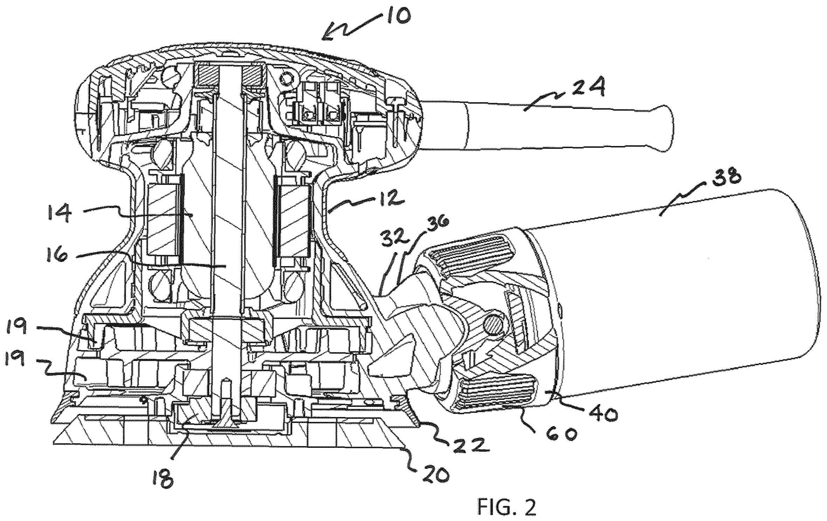

Turning to the FIGS. 1 and 2, an orbital sander is illustrated and designated with the reference numeral 10. The orbital sander includes a housing 12, a motor 14 disposed within the housing, an output shaft 16 driven by the motor, an orbital mechanism disposed beneath the housing, and a sanding element 20 coupled with the output shaft.

The orbital mechanism includes a platen 22 to which the sanding element 20 or other abrasives or materials (e.g., polishing pads) can be releasably adhered. Such sanding elements 20 can be configured in the pressure sensitive adhesive (PSA) variety as well as a hook and loop variety, each of which is familiar to those skilled in the art, and can be provided with holes to facilitate dust collection.

The platen 22 is adapted to be driven rotationally and in a orbital pattern by the motor 14. An AC power cord 24 is coupled with the housing 12 to provide power to the motor 14. The motor 14 is turned on and off by a suitable ON/OFF switch 26 coupled with the housing 12. Also, a plurality of textured members 25 for maintaining gripping control of the tool is on the exterior surface the housing 12.

In the orbital sander shown in FIGS. 1 and 2, the housing 12 is sized for a palm grip at the top of the housing and for a single-handed grip around the body. For a random orbital sander of the type shown in FIG. 1, output shaft 16 is typically directly coupled to a counterweight 18, which may incorporate integral fan blades 19 used for dust collection.

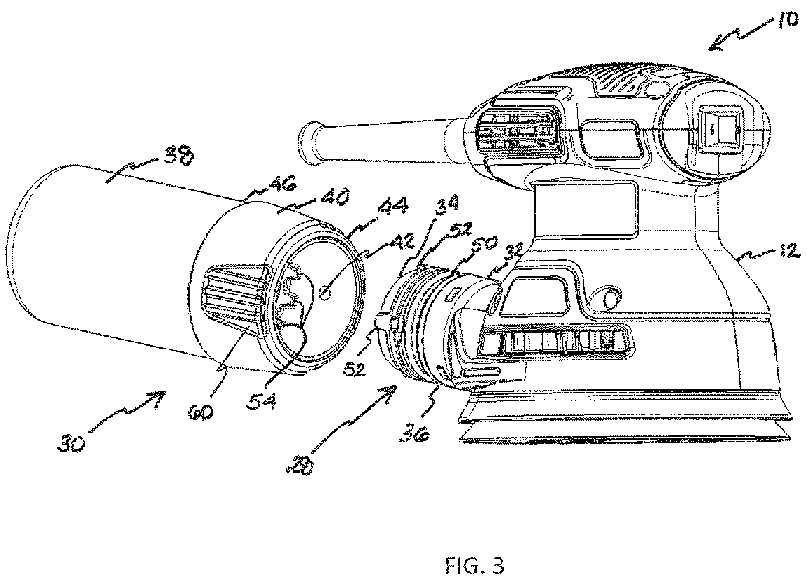

As illustrated in FIG. 3, the housing 12 includes a channel member or dust port 28 that exhausts dust generated by the frictional contact of the sanding element 20 with a workpiece, out of the housing. In an embodiment, the dust port 28 can be an integral portion of the tool housing 12. In another embodiment, the dust port 28 can be separately attachable to the tool housing 12. Dust collection is achieved through the dust collection system 30.

The dust port has a proximal end 32 connected to the housing 12 and a distal end 34 for exhausting dust. The interior of the dust port 28 includes a nozzle 27 for channeling the dust from the housing to the dust port. The proximal end 32 of the dust port 28 further includes an elongated portion 36 that is adjacent to and axially spaced from the distal end 34. The elongated portion 36 has a continuous generally tubular shape. The distal end 34 of the dust port includes a plurality of dust port castellations 52 on the exterior surface. In an embodiment, the dust port castellations 52 are radially spaced thereabout and form a raised surface.

The dust collection system 30 is coupled to the housing dust port 28. The dust collection system 30 includes a dust collecting receptacle, such as dust bag 38 for collecting debris from the power tool. The dust bag 38 may illustratively be removably secured to housing 12. The dust collection system 30 also includes a connector mechanism for connecting the dust bag 38 to the dust port 28.

The dust bag 38 can be formed by molding, sintering or by other means a rigid, porous, plastic material, preferably porous polyethylene, polypropylene, polystyrene, or other polyolefins having a pore size effective to retain sanding dust; it has been found that a pore size of 120-140 microns is satisfactory. In the embodiment shown, dust bag 38 is substantially cylindrical and has an internal diameter of approximately 5.1 cm (two inches), a length of approximately 10.2 cm (four inches), and a typical wall thickness of 0.38 cm (0.15 inch). Those skilled in the art will recognize that other sizes and shapes of sander filters consistent with the present filter invention may also be useful.

FIGS. 3, 4 and 6 illustrate the connector mechanism that connects the dust bag 38 or other accessory to the power tool. As shown in FIGS. 3, 4 and 6, the connector mechanism can be in the form of a collar assembly 40 that is arranged to be operatively connected to the dust port 28. The collar assembly 40 is attachable to the elongated portion 36 or body of the dust port 28. For example, the collar assembly 40 can be attached around the body of the dust port 28. The dust bag 38 is connected to the collar assembly 40 by an attaching mechanism as known in the art.

The collar assembly 40 has a proximal end 44 and a distal end 46. The proximal end 44 engages the elongated portion 36 of the dust port 28. The distal end 46 of the collar assembly 40 is attached to the dust bag 38. The distal end 46 of the collar assembly also includes a plurality of castellations 54 radially spaced about an interior surface thereof for non-selectively engaging the plurality of dust port castellations 52 to establish a mating interface between the collar assembly 40 and the dust port 28.

The collar assembly 40 includes an inner collar 40a, an outer collar 40b, rotatable with respect to the inner collar, and at least one locking member 42 disposed therebetween. The inner collar castellations 54 are located on the inner collar 40a of the collar assembly 40 such that the inner collar can be operatively connected in a fixed relationship with the dust port 28 through the mating relationship of the respective castellations 52, 54. The outer collar 40b can be rotatably connected to the inner collar. The dust bag 38 is illustrated as fixed to the inner collar 40a at the distal end 46 of the collar assembly 40.

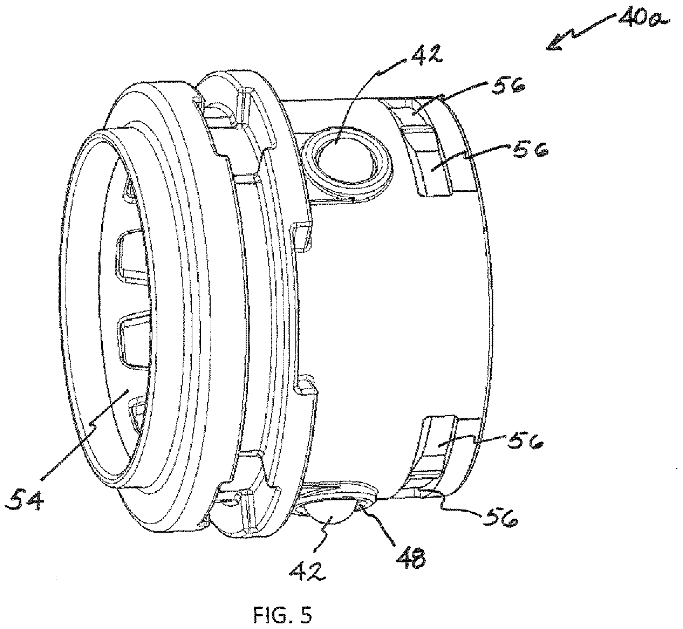

As shown in FIGS. 3-6, and in particular FIG. 5, a plurality of locking members 42 is radially spaced about the collar assembly 40 to establish a locking relationship between the collar assembly and the dust port 28. The locking relationship creates a non-axially moveable connection between the collar assembly 40 and the dust port 28.

The locking members 42 are recessed within one or more locking member apertures 48 within the inner collar 40a. Specifically, the locking members 42 can be configured to float within the locking member apertures 48 and protrude into the interior of the inner collar.

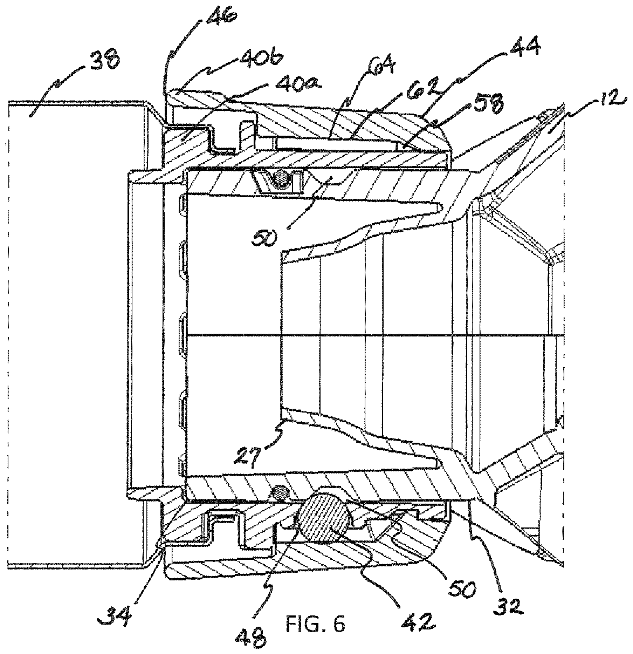

The elongated portion 36 of the dust port 28 includes a radially configured locking member groove 50, as shown in FIG. 6, on the exterior surface thereof. The locking member groove 50 receives the locking members 42 in a friction fit to effect locking of the collar assembly 40 to the dust port 28.

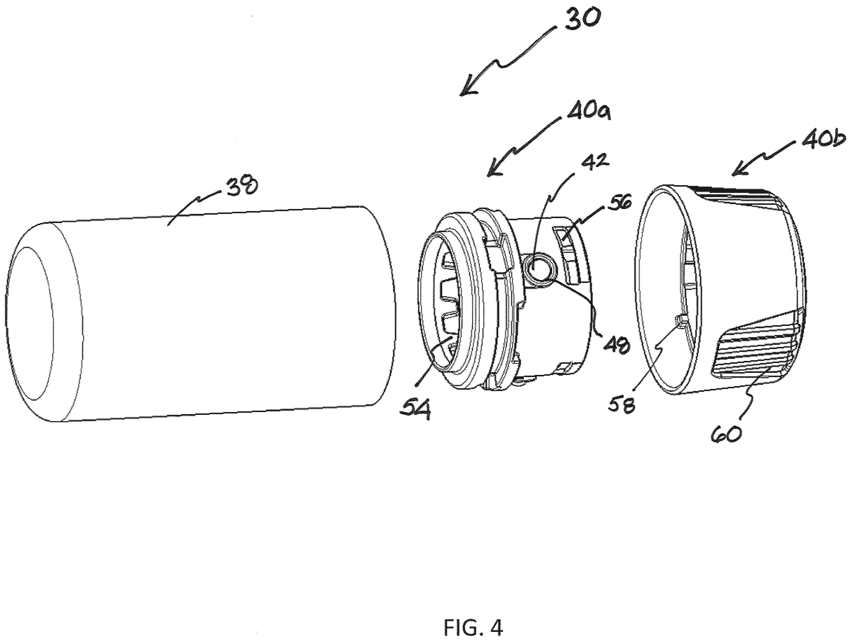

The locking member 42 is illustrated, for example, in FIGS. 4-6, as a ball. There can be any number of balls to serve as bearings to lock the collar assembly 40 and dust port 28 together. In an exemplary embodiment of the present invention, the collar assembly 40 has three balls. The balls can be formed from any material including but not limited to a metal, such as steel.

The outer collar 40b actuates locking members 42 by rotating in a first direction, either clockwise or counterclockwise, such that ramps 62, discussed below, protruding from the interior surface of the outer collar 40b engage push the locking members 42 radially into the locking member groove 50 on the dust port 28.

The inner collar 40a includes a plurality of inner collar castellations 54 along an interior surface at the distal end 46 of the collar assembly 40. In an embodiment, the inner collar castellations 54 form a raised surface. The plurality of castellations on the interior surface of the inner collar 40a mate or interlock with the raised surfaces formed by the plurality of dust port castellations 52 to join the collar assembly 40 and the dust port 28 together. The dust port 28 can have at least one castellation for mating with at least one castellation of the collar assembly 40 to provide resistance to relative rotation between the dust port and the collar assembly. The inner collar 40a can be removably fixed to the dust port 28 and an outer collar 40b can be rotatable with respect to the inner collar.

The inner collar 40a is thereby in a fixed rotational position with respect to the dust port 28, while the outer collar 40b is free to rotate. The rotary fixation of the inner collar 40a allows the user to rotate the outer collar 40b without disturbing the inner collar-dust port connection. In the embodiment illustrated in FIG. 3, for example, the number of castellations on the collar assembly 40 can be greater than the number of castellations on the dust port 28. Alternatively, the number of castellations on the collar assembly 40 can be less than the number of castellations on the dust port 28. As a result, the user can actuate the locking feature with one hand by rotating the outer collar 40b, without having to pre-align or look for alignment between the dust port and the collar assembly 40. Pre-alignment is an additional connection step wherein specific components must be aligned to effect a mating relationship. If the components are not aligned, adjustments must be made, such as tweaking the location of one component with respect to the other component to achieve the mating relationship before locking the components together.

In an exemplary embodiment of the present invention, because there are fewer castellations on the dust port 28 than on the collar assembly 40, when joining the dust port and collar assembly, any castellation on the dust port can achieve a mating relationship with the castellations on the collar assembly. As such, the user does not have to pre-align components of the collar assembly 40 with respect to the dust port 28 to begin locking the collar assembly to the dust port.

As shown in FIGS. 4 and 5, in addition to the plurality of locking apertures 48 radially spaced about the inner collar 40a, there are corresponding recess members 56 on an exterior surface thereof. The recess members 56 are located between the plurality of locking apertures 48 and the proximal end on an exterior surface of the inner collar 40a. The interior surface of the outer collar 40b includes snap tabs 58 at the proximal end 44 that removably snap into the recess members 56 on the exterior surface of the inner collar 40a.

As shown in FIGS. 3 and 4, the exterior surface of the outer collar 40b can have a gripping member 60 that provides a non-slip or resistive surface for the user to contact in rotating the outer collar.

The collar assembly 40 can be locked onto and unlocked from the dust port 28 by rotating the collar on the dust port thereby actuating or deactivating the locking member 42. The inner collar castellations 54 and the dust port castellations 52 on the exterior surface thereof provide an alignment between the collar assembly 40 and dust port and hold the connector mechanism in place so that the user need not pre-align the elements of the collar assembly and the dust port to establish the interface between the respective castellations prior to rotating the outer collar 40b to lock the collar assembly to the dust port.

The interior surface of the outer collar 40b includes ramps 62 corresponding to the number of locking members 42. The ramps have a rise portion at one end, which projects toward an interior of the outer collar, and a tapered portion at the opposite end which is substantially less projecting toward the interior surface of the outer collar. When the outer collar rotates in a first direction, the rise portion 64 of the ramps 62 apply a force to the locking members 42 and press the locking members into the locking member groove 50 of the dust port 28 to lock the collar assembly, specifically, through the inner collar 40a thereof, to the dust port. When the outer collar 40b rotates in a second direction opposite to the first direction, the force on the locking members 42 caused by the rise portion 64 of the ramps 62, is removed to unlock the collar assembly 40 from the dust port 28.

The connector mechanism 40 is locked to the dust port 28 by rotating the outer collar 40b with respect to the inner collar 40a and joined dust port 28 until the locking member is positioned within the locking member groove 50 on the elongated portion 36 of the dust port. Due to the force applied by the rise portion of the ramps 62, the plurality of locking members engages the locking member groove 50 in a friction fit.

As shown in the Figures, the number of castellations on the dust port exterior surface can be fewer than the number of castellations of the interior surface of the inner collar. This way, the dust port castellations and collar castellations do not require a specific alignment before being rotated and locked together. Therefore, the joining of the connector mechanism members and the subsequent locking of the dust bag to the dust port can be achieved in one fluid hand movement, which reduces connection time.

The castellations 52, 54 can be of any shape including, but not limited to: trapezoidal, square, triangular, rectangular, toothed, arcuate, or any shape capable of preventing rotational movement between the collar assembly 40 and the dust port 28.

As a result of the connector mechanism described herein, the dust bag or other accessory can be securely connected to the power tool and easily removed. The dust port can be coupled either to a passive dust collector, such as a bag or filter housing, or by a hose to an active system such as a vacuum cleaner. A hog ring can be provided to bias split segments of the dust port together.

## Claims

1. A power tool (10), comprising:
a housing (12);
a dust port (28) on the housing (12), wherein a proximal end (32) of the dust port (28) further comprises an elongated portion (36) having a continuous generally tubular shape;
**characterized by**:
a first plurality of castellations (52) radially spaced about the dust port (28) at a distal end (34), the first plurality of castellations being adjacent to and axially spaced from the elongate portion (36);
a collar assembly (40) having proximal (44) and distal (46) ends, the proximal end (44) engaging the elongated portion (36) of the dust port (28) and the distal end (46) comprising a second plurality of castellations (54) radially spaced about an interior surface thereof for non-selectively engaging the first plurality of castellations (52) to establish a mating interface between the collar assembly (40) and the dust port (28); and
a plurality of locking members (42) radially spaced about the collar assembly (40) to establish a locking relationship between the collar assembly (40) and the dust port (28);wherein the collar assembly (40) comprises an inner collar (40a) that is removably fixable to the dust port (28) and an outer collar (40b) disposed around the inner collar (40a) and rotatable with respect to the inner collar (40a);
wherein the second plurality of castellations (54) are radially spaced about an interior surface of the inner collar (40a);
wherein the plurality of locking members (42) are recessed within a plurality of respective apertures (48) in the inner collar (40a);
wherein the elongate portion (36) of the dust port (28) comprises a radially configured locking member groove (50) on an exterior surface thereof for receiving the plurality of locking members (42);
wherein the interior surface of the outer collar (40b) comprises ramps (62) having a rise portion (64) and a tapered portion, wherein when the outer collar (40b) rotates in a first direction, the rise portion of the ramps (62) apply a force against the locking members (42) to press the plurality of locking members (42) into the locking member groove (50) to lock the collar assembly (40) to the dust port (28) and, when the outer collar (40b) rotates in a second direction, opposite to the first direction, the force applied by the ramps (62) is removed to unlock the collar assembly (40) from the dust port (28);
wherein the inner collar (40a) comprises recess members (56) on an exterior surface thereof, wherein the recess members (56) are located between the plurality of apertures (48) and the proximal end of the collar assembly (40); and
wherein an interior surface of the outer collar (40b) comprises snap tabs (58) at the proximal end (44) of the collar assembly (40) that removably snap into the recess members (56) on the exterior surface of the inner collar (40a) to retain the outer collar (40b) around the inner collar (40a).

2. The power tool (10) of claim 1, wherein the first plurality of castellations (52) are integrally formed on an exterior surface of the dust port (28) and the second plurality of castellations (54) are integrally formed on an interior surface of the inner collar (40a).

3. The power tool (10) according to claim 2, wherein any of the second plurality of castellations (54) on the inner collar (40a) achieve a mating interface with any of the first plurality of castellations (52) on the dust port (28) without pre-alignment.

4. The power tool according to any one of the preceding claims, wherein a number of castellations (54) on the inner collar (40a) is greater than a number of castellations (52) on the dust port (28).

5. The power tool according to any of the preceding claims, wherein the plurality of locking members (42) float within the plurality of apertures (48) in the inner collar (40a).

6. The power tool (10) according to any one of the preceding claims, wherein the plurality of locking members (42) are received in the locking member groove (50) in a friction fit.

7. The power tool according to any one of the preceding claims, wherein the plurality of locking members (42) comprise metal balls.

8. The power tool (10) according to any one of the preceding claims, wherein a dust bag (38) for collecting debris from the power tool (10) is fixed to the distal end of the collar assembly (40).

9. The power tool (10) according to any one of the preceding claims, wherein the locking relationship creates a non-axially moveable connection between the collar assembly and the dust port.

## Patentansprüche

1. Elektrowerkzeug (10), umfassend:
ein Gehäuse (12);
einen Staubanschluss (28) an dem Gehäuse (12), wobei ein proximales Ende (32) des Staubanschlusses (28) weiter einen länglichen Abschnitt (36) umfasst, der eine durchgehende, im Allgemeinen röhrenförmigen Form aufweist;
**gekennzeichnet durch**:
eine erste Vielzahl von Zinnen (52), die radial an einem distalen Ende (34) um den Staubanschluss (28) herum angeordnet sind, wobei die erste Vielzahl von Zinnen neben dem länglichen Abschnitt (36) liegt und axial von diesem beabstandet ist;
eine Kragenanordnung (40), die ein proximales (44) und ein distales (46) Ende aufweist, wobei das proximale Ende (44) mit dem länglichen Abschnitt (36) des Staubanschlusses (28) in Eingriff steht und das distale Ende (46) eine zweite Vielzahl von Zinnen (54) umfasst, die radial um seine Innenfläche beabstandet sind, um nicht selektiv mit der ersten Vielzahl von Zinnen (52) in Eingriff zu gelangen, um eine passende Grenzfläche zwischen der Kragenanordnung (40) und dem Staubanschluss (28) herzustellen; und
eine Vielzahl von Verriegelungselementen (42), die radial um die Kragenanordnung (40) herum beabstandet sind, um eine Verriegelungsbeziehung zwischen der Kragenanordnung (40) und dem Staubanschluss (28) herzustellen; wobei die Kragenanordnung (40) einen inneren Kragen (40a), der abnehmbar an dem Staubanschluss (28) befestigbar ist, und einen äußeren Kragen (40b) umfasst, der um den inneren Kragen (40a) herum angeordnet und in Bezug auf den inneren Kragen (40a) drehbar ist;
wobei die zweite Vielzahl von Zinnen (54) radial um eine Innenfläche des inneren Kragens (40a) herum beabstandet ist;
wobei die Vielzahl von Verriegelungselementen (42) innerhalb einer Vielzahl von jeweiligen Öffnungen (48) in dem inneren Kragen (40a) versenkt ist;
wobei der längliche Abschnitt (36) des Staubanschlusses (28) eine radial konfigurierte Verriegelungselementnut (50) an einer äußeren Oberfläche davon zum Aufnehmen der Vielzahl von Verriegelungselementen (42) umfasst;
wobei die Innenfläche des äußeren Kragens (40b) Rampen (62) umfasst, die einen ansteigenden Abschnitt (64) und einen verjüngten Abschnitt aufweisen, wobei, wenn sich der äußere Kragen (40b) in eine erste Richtung dreht, der ansteigende Abschnitt der Rampen (62) eine Kraft auf die Verriegelungselemente (42) ausübt, um die Vielzahl von Verriegelungselementen (42) in die Verriegelungselementnut (50) zu drücken, um die Kragenanordnung (40) an dem Staubanschluss (28) zu verriegeln, und wenn sich der äußere Kragen (40b) in eine zweite Richtung dreht, die der ersten Richtung entgegengesetzt ist, die von den Rampen (62) ausgeübte Kraft entfernt wird, um die Kragenanordnung (40) von dem Staubanschluss (28) zu lösen;
wobei der innere Kragen (40a) Aussparungselemente (56) auf einer äußeren Oberfläche davon aufweist, wobei sich die Aussparungselemente (56) zwischen der Vielzahl von Öffnungen (48) und dem proximalen Ende der Kragenanordnung (40) befinden; und
wobei eine Innenfläche des äußeren Kragens (40b) Schnapplaschen (58) an dem proximalen Ende (44) der Kragenanordnung (40) umfasst, die lösbar in die Aussparungselemente (56) an der äußeren Oberfläche des inneren Kragens (40a) einschnappen, um den äußeren Kragen (40b) um den inneren Kragen (40a) herum festzuhalten.

2. Elektrowerkzeug (10) nach Anspruch 1, wobei die erste Vielzahl von Zinnen (52) integral auf einer äußeren Oberfläche des Staubanschlusses (28) gebildet ist und die zweite Vielzahl von Zinnen (54) integral auf einer Innenfläche des inneren Kragens (40a) gebildet ist.

3. Elektrowerkzeug (10) nach Anspruch 2, wobei jede der zweiten Vielzahl von Zinnen (54) auf dem inneren Kragen (40a) eine passende Grenzfläche mit jeder der ersten Vielzahl von Zinnen (52) auf dem Staubanschluss (28) ohne vorherige Ausrichtung erreicht.

4. Elektrowerkzeug nach einem der vorstehenden Ansprüche, wobei eine Anzahl von Zinnen (54) an dem inneren Kragen (40a) größer ist als eine Anzahl der Zinnen (52) an dem Staubanschluss (28).

5. Elektrowerkzeug nach einem der vorstehenden Ansprüche, wobei die Vielzahl von Verriegelungselementen (42) innerhalb der Vielzahl von Öffnungen (48) in dem inneren Kragen (40a) schwimmend gelagert ist.

6. Elektrowerkzeug (10) nach einem der vorstehenden Ansprüche, wobei die Vielzahl von Verriegelungselementen (42) in einer Reibungspassung in der Verriegelungselementnut (50) aufgenommen ist.

7. Elektrowerkzeug nach einem der vorstehenden Ansprüche, wobei die Vielzahl von Verriegelungselementen (42) Metallkugeln umfasst.

8. Elektrowerkzeug (10) nach einem der vorstehenden Ansprüche, wobei ein Staubbeutel (38) zum Auffangen von Schmutz aus dem Elektrowerkzeug (10) an dem distalen Ende der Kragenanordnung (40) befestigt ist.

9. Elektrowerkzeug (10) nach einem der vorstehenden Ansprüche, wobei die Verriegelungsbeziehung eine nicht axial bewegliche Verbindung zwischen der Kragenanordnung und dem Staubanschluss erzeugt.

## Revendications

1. Outil électrique (10), comprenant :
un boîtier (12) ;
un orifice d'extraction de poussières (28) sur le boîtier (12), dans lequel une extrémité proximale (32) de l'orifice d'extraction de poussières (28) comprend en outre une partie allongée (36) présentant une forme continue généralement tubulaire ;
**caractérisé par** :
une première pluralité de créneaux (52) espacés radialement autour de l'orifice d'extraction de poussières (28) au niveau d'une extrémité distale (34), la première pluralité de créneaux étant adjacente à et espacée axialement de la partie allongée (36) ;
un ensemble collerette (40) présentant des extrémités proximale (44) et distale (46), l'extrémité proximale (44) venant en prise avec la partie allongée (36) de l'orifice d'extraction de poussières (28) et l'extrémité distale (46) comprenant une seconde pluralité de créneaux (54) espacés radialement autour d'une surface intérieure de celle-ci pour venir en prise de manière non sélective avec la première pluralité de créneaux (52) afin d'établir une interface d'accouplement entre l'ensemble collerette (40) et l'orifice d'extraction de poussières (28) ; et
une pluralité d'éléments de verrouillage (42) espacés radialement autour de l'ensemble collerette (40) pour établir une relation de verrouillage entre l'ensemble collerette (40) et l'orifice d'extraction de poussières (28) ; dans lequel l'ensemble collerette (40) comprend une collerette interne (40a) qui peut être fixée de manière amovible à l'orifice d'extraction de poussières (28) et une collerette externe (40b) disposée autour de la collerette interne (40a) et pouvant tourner par rapport à la collerette interne (40a) ;
dans lequel la seconde pluralité de créneaux (54) sont radialement espacés autour d'une surface intérieure de la collerette interne (40a) ;
dans lequel la pluralité d'éléments de verrouillage (42) sont enchâssés dans une pluralité d'ouvertures respectives (48) dans la collerette interne (40a) ;
dans lequel la partie allongée (36) de l'orifice d'extraction de poussières (28) comprend une rainure pour éléments de verrouillage (50) configurée radialement sur une surface extérieure de celle-ci pour recevoir la pluralité d'éléments de verrouillage (42) ;
dans lequel la surface intérieure de la collerette externe (40b) comprend des rampes (62) présentant une partie montante (64) et une partie conique, dans lequel lorsque la collerette externe (40b) tourne dans une première direction, la partie montante des rampes (62) applique une force contre les éléments de verrouillage (42) pour presser la pluralité d'éléments de verrouillage (42) dans la rainure pour éléments de verrouillage (50) pour verrouiller l'ensemble collerette (40) à l'orifice d'extraction de poussières (28) et, lorsque la collerette externe (40b) tourne dans une seconde direction, opposée à la première direction, la force appliquée par les rampes (62) est supprimée pour déverrouiller l'ensemble collerette (40) de l'orifice d'extraction de poussières (28) ;
dans lequel la collerette interne (40a) comprend des éléments en retrait (56) sur une surface extérieure de celle-ci, dans lequel les éléments en retrait (56) sont situés entre la pluralité d'ouvertures (48) et l'extrémité proximale de l'ensemble collerette (40) ; et
dans lequel une surface intérieure de la collerette externe (40b) comprend des pattes à emboîtement (58) au niveau de l'extrémité proximale (44) de l'ensemble collerette (40) qui s'emboîtent de manière amovible dans les éléments en retrait (56) sur la surface extérieure de la collerette interne (40a) pour retenir la collerette externe (40b) autour de la collerette interne (40a).

2. Outil électrique (10) selon la revendication 1, dans lequel la première pluralité de créneaux (52) sont formés d'un seul tenant sur une surface extérieure de l'orifice d'extraction de poussières (28) et la seconde pluralité de créneaux (54) sont formés d'un seul tenant sur une surface intérieure de la collerette interne (40a).

3. Outil électrique (10) selon la revendication 2, dans lequel l'un quelconque de la seconde pluralité de créneaux (54) sur la collerette interne (40a) assure une interface d'accouplement avec l'un quelconque de la première pluralité de créneaux (52) sur l'orifice d'extraction de poussières (28) sans alignement préalable.

4. Outil électrique selon l'une quelconque des revendications précédentes, dans lequel un nombre de créneaux (54) sur la collerette interne (40a) est supérieur à un nombre de créneaux (52) sur l'orifice d'extraction de poussières (28).

5. Outil électrique selon l'une quelconque des revendications précédentes, dans lequel la pluralité d'éléments de verrouillage (42) flottent à l'intérieur de la pluralité d'ouvertures (48) dans la collerette interne (40a).

6. Outil électrique (10) selon l'une quelconque des revendications précédentes, dans lequel la pluralité d'éléments de verrouillage (42) sont reçus dans la rainure pour éléments de verrouillage (50) dans un ajustement par friction.

7. Outil électrique selon l'une quelconque des revendications précédentes, dans lequel la pluralité d'éléments de verrouillage (42) comprennent des billes métalliques.

8. Outil électrique (10) selon l'une quelconque des revendications précédentes, dans lequel un sac à poussières (38) destiné à recueillir les débris générés par l'outil électrique (10) est fixé à l'extrémité distale de l'ensemble collerette (40).

9. Outil électrique (10) selon l'une quelconque des revendications précédentes, dans lequel la relation de verrouillage crée une connexion non mobile axialement entre l'ensemble collerette et l'orifice d'extraction de poussières.
